# EUROPÄISCHE PATENTSCHRIFT

(11) **EP 2 094 987 B1**
(45) Veröffentlichungstag und Bekanntmachung des Hinweises auf die Patenterteilung: **24.04.2013**
(21) Anmeldenummer: 07847990.4
(22) Anmeldetag: 07.12.2007
(51) Int. Cl.: F16D 23/02

(54) **SCHIEBEMUFFE**
SLIDING SLEEVE
MANCHON COULISSANT

(30) Priorität: 23.12.2006 DE 102006061403
(43) Veröffentlichungstag der Anmeldung: 02.09.2009
(73) Patentinhaber: Schaeffler Technologies AG & Co. KG, 91074 Herzogenaurach (DE)
(72) Erfinder: KARAIS, Thomas, 90449 Nürnberg (DE); SPOERL, Marcus, 91126 Rednitzhembach (DE)
(86) Internationale Anmeldenummer: PCT/EP2007/063541
(87) Internationale Veröffentlichungsnummer: WO 2008/077744

(56) Entgegenhaltungen:
- EP-A- 1 411 260
- EP-A- 1 790 869
- DE-A1- 19 912 131
- DE-U1-202006 019 960
- US-A- 3 894 619

## Beschreibung

### Gebiet der Erfindung

Die Erfindung betrifft eine Schiebemuffe einer Synchronisiereinheit eines Schaltgetriebes, die einen Träger als Muffenkörper mit einer Schaltgabelführung sowie eine Verzahnung am Innenumfang der Schiebemuffe aufweist, welche in Richtung der Längsmittelachse der Synchronisiereinheit verläuft.

### Hintergrund der Erfindung

Die Erfindung bezieht sich auf das Anwendungsgebiet Synchronisiereinheiten für Fahrzeuggetriebe mit Synchronkörpern und Schiebemuffen. Die Synchronkörper weisen normalerweise eine in Längsrichtung einer Getriebewelle ausgerichtete äußere Verzahnung oder ein ähnlich gestaltetes Keilprofil auf. In diese äußere Verzahnung der Synchronkörper greift eine innere Verzahnung bzw. ein Keilprofil der Schiebemuffe ein. Die Schiebemuffe ist dabei konzentrisch zum Synchronkörper und auf diesem längs verschiebbar angeordnet. Die Schiebemuffen und die Synchronkörper sind aufgrund ihrer Verzahnung auf den üblichen, spanabhebenden Wegen nur sehr zeit- und kostenintensiv herzustellen. Daher gewinnen Verzahnungen, die in einem Umformprozess ohne wesentliche Zerspanarbeit gefertigt sind, zunehmend für die Herstellung von Kraftfahrzeugteilen an Bedeutung. Letztere Verzahnungen zeichnen sich durch ein geringes Gewicht der geformten Teile, der besseren Ausnutzung bzw. Einsparung von Material bei ihrer Fertigung und durch kürzere Zeiten für ihre Herstellung im Vergleich den durch spanabhebende Verfahren hergestellte Verzahnungen aus.

Die Verzahnung weist in der Regel die bekannten Merkmale einer Verzahnung an Schiebemuffen, wie dachartig angespitzte Zähne, hinterschnittene Zahnflanken, radiale Rastvertiefungen oder ähnliches auf. Unter Verzahnung und Zähnen sind in der Erfindung alle Arten und Ausführungen von Keilen, Keilprofilen, Klauen, Kerbverzahnungen usw. zu verstehen, die für eine formschlüssige Verbindung zum Übertragen von Drehmomenten geeignet sind. Dabei sind die Flanken der Zähne längs zur Rotationsachse des hohlzylindrischen Körpers ausgerichtet, wobei die Rotationsachse des Körpers mit der Verzahnung der Rotationsachse der Schiebemuffe entspricht.

Die DE 25 37 495 beschreibt eine Verzahnung, die in ein relativ dünnwandiges Blech eingeformt wird und dabei ein wellenartig ausgebildetes Keilprofil bildet. Das wellenartige Keilprofil kann durch Durchstellen des Blechs gebildet sein. Dabei ist das Blech pro zu erzeugendem Keil ausgehend von einer gedachten, neutralen Linie in eine Richtung, in diesem Fall nach außen, durchgestellt, um einen Zahn zu bilden. Die neutrale Linie verläuft dabei in etwa durch den Zahnfuß von einem Zahn zum anderen. Das einzelne Profil eines jeden Zahns der Verzahnung ist dadurch, im Querschnitt gesehen, durch ein einseitig offenes Hohlprofil gebildet. Dabei weist die Innenseite des Hohlprofils in der Regel die um die Blechdicke reduzierte Negativform der Zahnkontur auf.

Die Verzahnung wird nach dem Profilieren kreisrund gebogen sowie dabei an ihren Enden zusammengeführt. Die Enden der Verzahnung sind aneinander befestigt, so dass ein umfangsseitig geschlossener und belastbarer Ring entsteht. Dazu sind sie miteinander verschweißt. Die Verbindung der Enden ist aufgrund der in der Synchronkupplung zu übertragenden Drehmomente hoch belastet. Der Aufwand für das Herstellen einer sicheren Verbindung ist deshalb hoch, es können Probleme hinsichtlich der Steifigkeit der Verzahnung bei der Übertragung von Momenten entstehen.

Eine Lösung dieses Problems ist in der DE 102 47 953 A1 vorgeschlagen worden: Um ein Aufbrechen der Verbindung an dem Anteil des Zahnprofils, der in die Kupplungsverzahnung eingreift, zu verhindern und dabei insbesondere die Spannungen in den profilierten Hohlkörper einerseits nicht zu hoch werden zu lassen, andererseits ein besonders leichtes Getriebebauteil zu schaffen, weist die dort vorgestellte Schiebemuffe einen einteiligen sowie umfangsseitig geschlossenen Stützring aus Stahl auf. Der Stützring ist auf dem mit der Verzahnung profilierten hohlzylindrischen Körper befestigt. Dabei ist die Verzahnung in den Stützring eingepresst, alternativ eingelegt und dabei mit dem Stützring verschweißt. Nachteilig an dieser Schiebemuffe wiederum ist, dass sich diese Lösung nicht für LKW-Schiebemuffen bzw. für große Schiebemuffen zur Übertragung hoher Drehmomente eignet, da die Verzahnung großen Verformungsbelastungen nicht ausreichend stand hält. Es entstehen dann Probleme hinsichtlich der Steifigkeit der Verzahnung bei der Übertragung von Momenten.

Eine weitere Schiebemuffe nach dem Stand der Technik ist in EP 1 411 260 A1 offenbart.

### Zusammenfassung der Erfindung

Aufgabe der Erfindung ist es daher, eine durch spanlose Formgebung gefertigte Verzahnung mit einem Träger als Bandage zu schaffen, welche ein geringes Gewicht aufweist, einfach zu fertigen ist und hohen Belastungen standhält.

Diese Aufgabe ist nach dem Gegenstand des kennzeichnenden Teils des Anspruchs 1 dadurch gelöst, dass die Verzahnung aus mehreren Bogensegmenten ausgebildet ist, wobei die Bogensegmente spanlos durch Kaltumformen, beispielsweise durch Prägen, hergestellt und durch den Träger zumindest axial fixiert sind. Dadurch dass die Verzahnung nicht einteilig, sondern als mehrere, abschnittartige und damit kürzere Bogensegmente ausgebildet ist, reduzieren sich die inneren Verformungsbelastungen. Dadurch eignet sich die erfindungsgemäße Schiebemuffe für sehr große Durchmesser. Zudem ist die Positionierung der Verzahnung durch die Ausbildung in Bogensegmente aufgrund des teilweise tangential vorhandenen Spiel einfacher möglich. Die Bogensegmente aus Blech ermöglichen eine komplexe Formgebung der Zähne bei geringen Fertigungskosten.

Die Bogensegmente sind in ihrem Ausgangszustand aus einem Blechstreifen ausgebildet. Eine besonders vorteilhafte Form der Zähne ist eine Trogform. Dabei weist die Öffnung des Trogs vom radial nach innen oder außen weisenden Kopf des Zahns weg. Die Zähne sind also stirnseitig an ihren Zahnspitzen mit Dachschrägen vollständig geschlossen. Die Dachschrägen müssen dabei nicht notwendigerweise spitz zulaufen, um die Zahnspitzen zu bilden; vielmehr bezeichnet Zahnspitze die Punkte, die am weitesten von der früheren Ebene des Blechstreifens entfernt sind. Weiterhin weist die Verzahnung die bekannten Merkmale, wie dachartig angespitzte Zähne, hinterschnittene Zahnflanken, radiale Rastvertiefungen oder Ähnliches auf. Unter Verzahnung und Zähnen sind in der Erfindung alle Arten und Ausführungen von Keilen, Keilprofilen, Klauen, Kerbverzahnungen usw. zu verstehen, die für eine formschlüssige Verbindung zum Übertragen von Drehmomenten geeignet sind und die zur Vereinfachung der Beschreibung unter dem Begriff Verzahnung zusammengefasst sind. Dabei sind die Flanken der Zähne längs mit der Rotationsachse des hohlzylindrischen Körpers ausgerichtet, wobei die Rotationsachse des Körpers mit der Verzahnung der Rotationsachse einer Schiebemuffe entspricht.

Mit einer Ausgestaltung ist der Träger einteilig sowie umfangsseitig geschlossenen ausgebildet. Der hohlzylindrische Abschnitt ist außen zumindest durch eine zylindrische Mantelfläche begrenzt. Innen umgreift der ringförmige Abschnitt das äußere Umfangsprofil. Die Wanddicke des ringförmigen Abschnitts entspricht mindestens der Zahnhöhe eines der Zähne der Verzahnung, wobei die Zahnhöhe die halbe Differenz aus dem größten Durchmesser des Fußkreises und aus dem kleinsten Durchmesser des Kopfkreises der höchsten Zähne der Verzahnung ist.

Der Träger ist entweder ein zu der Schaltgabelführung separates Teil, oder der Träger ist einteilig mit der Schaltgabelführung ausgebildet. So ist mit einer weiteren Ausgestaltung der Erfindung vorgesehen, dass die Schaltgabelführung eine in den Träger geformte sowie radial nach außen geöffnete Ringnut ist.

Die Verzahnung ist mittels des am Umfang geschlossen ausgeführten Trägers bandagiert und stützt sich unter hohen Belastungen an diesem ab. Dem einteilig mit der Schaltgabel ausgebildeten Abschnitt schließt sich radial außen wenigstens ein zumeist rotationssymmetrisch ausgebildeter Wandabschnitt des Trägers an, in den die Ringnut für die Schaltgabelführung eingebracht ist. Das sich längs der Ringnut anschließende und sich längs vorzugsweise bis zu den Stirnseiten der Verzahnung erstreckende Material des Trägers unterstützt die Stützwirkung.

Die Schiebemuffe gemäß Erfindung ist sehr kompakt ausgeführt. Es sind sowohl Schiebemuffen mit kleinen Außendurchmessern und hoher Stabilität herstellbar, da ein Großteil des stützenden Materials des Trägers sich längs an die Ringnut anschließt und somit, verglichen mit dem bisherigen Stand der Technik kaum oder nur geringfügig mehr radialer Bauraum durch die Schiebemuffe beansprucht ist, als auch Schiebemuffen mit großen Außendurchmessern, wobei hier durch die Mehrteiligkeit im Verhältnis der Bauraumzuwachs noch geringer ist. Durch das Abstützen am Träger sind auch Bleche mit geringer Blechdicke für die Herstellung der Verzahnung einsetzbar.

In einer Variante der Erfindung ist die Verzahnung in den Träger eingepresst oder alternativ eingelegt und dabei mit dem Träger verschweißt. Der Presssitz ist alternativ durch Schweißen oder Verstemmen der Teile aneinander gesichert. Die Schweißnaht bzw. die Schweißnähte der Schweißverbindung(en) verlaufen bevorzugt in Umfangsrichtung umlaufend sowie vorzugsweise an einer oder an beiden in die Längsrichtungen der Rotationsachse gewandten Stirnseiten der Schiebemuffe. Die Schweißverbindungen sind Verbindungen aus der Anwendung aller geeigneten Schweißverfahren, jedoch insbesondere aus der Anwendung des Laserschweißens und des Kondensator-Entladungsschweißens. Eine Fixierung kann aber alternativ unterbleiben, wenn die Verzahnung durch den Träger geführt ist.

Schließlich ist mit einer Ausgestaltung der Erfindung vorgesehen, dass die Verbindung der Enden der Bogensegmente an den Schnittkanten des Blechstreifens tangential oder in Umfangsrichtung entlastet ist. Dazu sind die Enden des Blechstreifens vorzugsweise mittels Fügetechniken wie durch den Kraft-Formschluss in einer oder mehrerer sogenannter Schlossverbindung(en) oder Schweißverbindung(en) bzw. mittels Kombinationen dieser Techniken aneinander befestigt. Die Schlossverbindung ist durch das tangentiale bzw. umfangsseitige Einhaken formschlüssig miteinander korrespondierender Elemente an den Enden des Blechstreifens gebildet (z. B. in der Form einer Schwalbenschwanzverbindung). Diese Verbindungen sind ggf. durch Prägungen oder Verstemmen bzw. durch Schweißen gesichert. Derartige Verbindungen entfallen alternativ dazu ganz. Die Bogensegmente sind in diesem Fall in den Träger eingepresst, eingelegt und/oder mit dem Träger verschweißt bzw. verstemmt. Die Enden liegen nur auf Stoß aneinander. Die Werkzeuge für den Zuschnitt des Blechstreifens sind vereinfacht, der Arbeitsgang des Verbindens der Enden entfällt in diesem Fall generell.

Der Träger ist ein Umformteil, das kalt umgeformt, vorzugsweise durch Walzen oder Rollieren, hergestellt ist. Vor dem Umformen sind die kalt zu bearbeitenden Rohlinge maximal auf eine Temperatur bis zu 120°C erwärmt. Der Rohling, aus dem der Ring mit einer Schaltgabelführung gewalzt ist, ist bevorzugt ein Schmiederohling. Nach dem Formen ist jede der die Ringnut der Schaltgabelführung begrenzenden Seitenwand um einen Winkel von 2° bis 3° von einer radialen und der Symmetrieebene der Ringnut gleichen oder parallelen Ebene seitlich zur Stirnseite der Schiebemuffe weg geneigt, d. h. der Querschnitt der Ringnut nimmt im Längsschnitt der Schiebemuffe betrachtet in radiale Richtung nach außen zu. Diese Schrägstellung der Wände verbleibt an der fertigen Schiebemuffe und trägt ggf. zu einer sinnvollen Führung und Zentrierung der in die Ringnut eingreifenden Enden der Schaltgabeln bei. Alternativ dazu sind die Wände so spanabhebend nachgearbeitet, dass sie zueinander parallel ausgerichtet sind.

Der Träger kann auch als Weichteil verwendet werden, so dass ein aufwändiges Härten mit eventueller Nachbearbeitung entfallen kann.

Die Rohlinge sind bevorzugt aus Stahl mit den Werkstoffbezeichnungen C15, 100Cr6 oder 16MnCr5 hergestellt. Alternativ dazu sind alle kaltumformbaren Stähle einsetzbar. Der zunächst kalt gewalzte Ring ist ggf. im Anschluss an den Formprozess an seiner nach innen weisenden zylindrischen Mantelfläche durch spanabhebende Verfahren oder durch Kalibrieren passgenau für den Sitz auf der Verzahnung bearbeitet.

Die Erfindung ermöglicht weiterhin den Einsatz eines Trägers aus Kunststoff, wodurch die Masse ganz erheblich reduziert wird. Die Kunststoffträger können dabei durch die üblichen Kunststoffbearbeitungstechniken wie beispielsweise Spritzgießen oder andere Umformverfahren hergestellt werden.

Die Schiebemuffe ist durch Fügen der Einzelteile und ggf. dem anschließenden Härten im wesentlichen fertig gestellt. Alternativ dazu ist vorgesehen, dass die Zähne der Verzahnung an der Schiebemuffe nach dem Befestigen der Schaltgabelführung auf der Verzahnung durch Kalibrieren und dabei unter Umständen auch nach dem Härten maßgenau zueinander ausgerichtet sind.

Besonders vorteilhaft an dieser Ausbildungsform der Verzahnung ist ein geringer Umformgrad des Materials, wodurch eine hohe Lebensdauer erzielt wird, eine hohe Elastizität und ein geringes Gewicht, da durch die gleich bleibenden Wandstärken die Ausgangsdicke des Bandmaterials optimal dem Anwendungszweck angepasst werden kann.

Weisen die Bogensegmente zwischen sich ein tangentiales Spiel auf, ist eine bessere Positionierung der die durch die Bogensegmente gebildeten Verzahnung gegenüber dem Träger möglich.

In einer Variante der Erfindung sind die Bogensegmente nur in den Träger eingelegt. Sie können in diesem frei rotieren, so dass es nicht erforderlich ist, dass die gesamte Schiebemuffe rotiert, sondern die Bogensegmente rotieren in Bezug auf den Träger. Damit kann der Träger mittels einer Schaltgabel fest mit einer Schaltstange verbunden werden, was Toleranzen reduziert und eine kompaktere Bauweise ermöglicht. Der Träger und die Schaltgabel können auch einteilig ausgebildet sein. Sofern es erforderlich ist, weist die nach innen orientierte Auflagefläche des Trägers eine Beschichtung auf, oder die Beschichtung ist rückseitig an den Bogensegmenten ausgebildet. Die Beschichtung kann zur Reibungsverminderung und/oder zur Verschleißfestigkeit dienen.

Schließlich können die Bogensegmente auch einen Rand aufweisen, der axial über den Träger vorsteht und zu einem Bord abgewinkelt ist. Die axiale Führung erfolgt dann nicht durch einen umlaufenden Rand des Trägers, sondern durch den umlaufenden Bord der Bogensegmente.

### Kurze Beschreibung der Zeichnungen

Die Erfindung wird nachfolgend anhand von einem Ausführungsbeispiel näher erläutert. Es zeigen:
- Figur 1: ein Ausführungsbeispiel einer erfindungsgemäßen Schiebemuffe in Schrägaufsicht,
- Figur 2: eine perspektivische Ansicht des profilierten Blechstreifens als Bogensegment,
- Figur 3: alle Bogensegmente, die zusammen die Verzahnung bilden, und
- Figur 4: eine perspektivische Ansicht des Trägers.

### Detaillierte Beschreibung der Zeichnungen

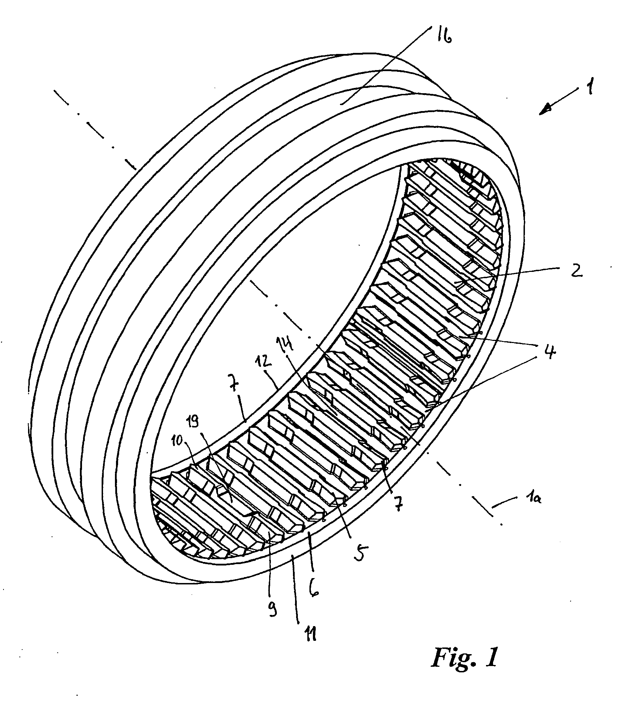

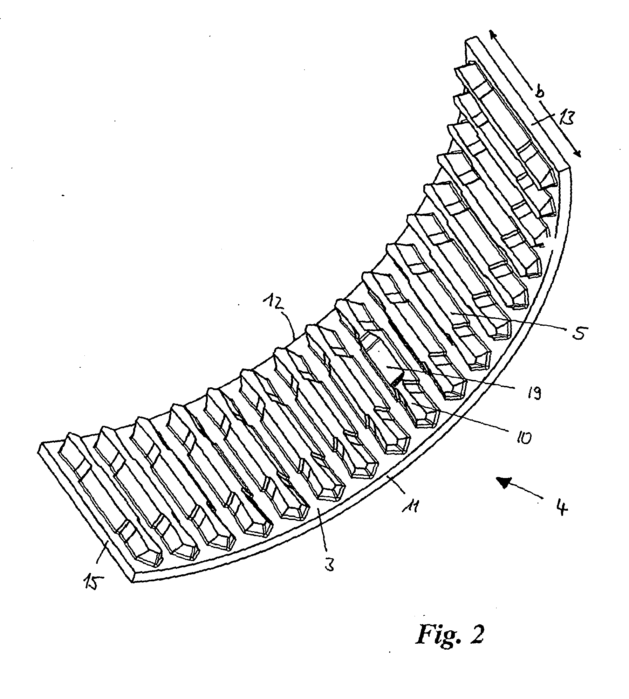

Figur 1 zeigt eine Schiebemuffe 1. Im wesentlichen ist die Schiebemuffe 1 um die Rotationsachse 1a rotationssymmetrisch ausgebildet und besteht aus einem Muffenkörper als Träger 16 und einer Verzahnung 2 mit einem Keilprofil 13. Die Verzahnung 2 ist durch mehrere, zu Bögen gebogene Blechstreifen 3 gebildet. Vormals sind die Blechstreifen 3 eben und gerade, werden dann profiliert und auf eine bestimmte Länge, den zukünftigen Bogen, geschnitten, wobei Enden 13, 15 (Figur 2) entstehen. Die Enden 13, 15 sind aufeinander zu gebogen. Die Stirnseiten 11, 12 der Verzahnung 2 sind jeweils von einem ringförmigen, sich an die Zähne 5 anschließenden Rand 6, 7 des Trägers 16 abgeschlossen. Diese Ränder 6, 7 weisen jedoch nicht radial weiter nach innen als der Zahnfuß, damit eine ungestörte Axialbewegung möglich ist. Die Bogensegmente 4 sind in den Träger 16 eingelegt und mit diesem verschweißt. Die Ränder 6 und 7 sind umfangsseitig geschlossen ausgeführt.

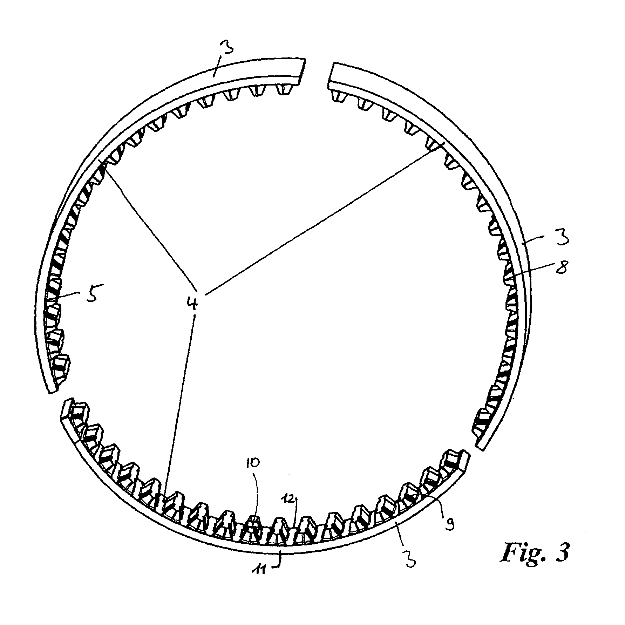

Figuren 2 und 3 zeigen, dass die Verzahnung 2 aus genau drei Bogensegmenten 4 besteht, die sich gemeinsam zu einem Vollkreis ergänzen, wenn ihre Enden 15 aneinander stoßen. Die Bogensegmente 4 sind mit hinterschnittenen Zähnen 5 versehen, deren Zahnspitzen 8 sich über die vollständige Breite b des Blechstreifens 3 erstrecken. Dabei sind die Zahnspitzen 8 der Zähne 5 durch Dachschrägen 9 vollständig geschlossen. Ein Zahn weist als Riegelnutzahn 10 eine Rastvertiefung 19 für den Eingriff eines nicht dargestellten Druckstücks auf. Die Zähne 5 sind voneinander durch Zahnlücken 14 getrennt.

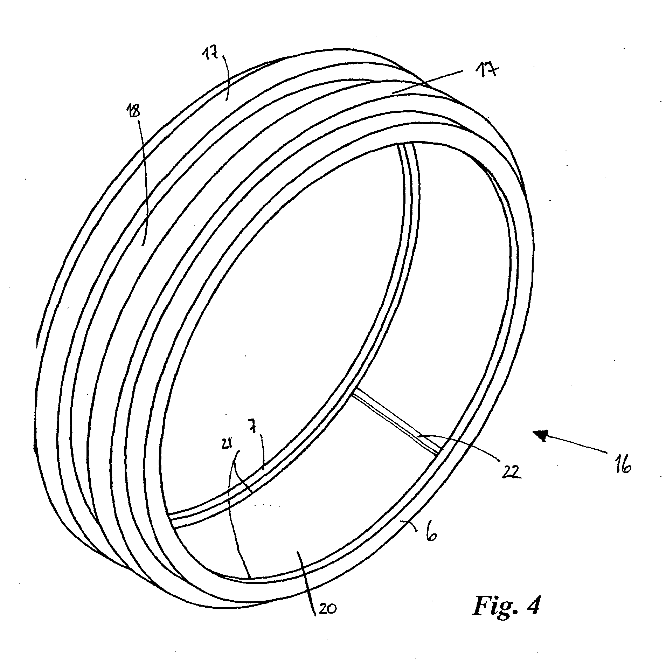

Figur 4 zeigt den die Verzahnung radial abstützenden Träger 16. Der Träger 16 ist aus Kunststoff geformt und umfangsseitig geschlossen ausgeführt. Er weist radial nach außen gerichtet zwei Ringe 17 auf, die eine nutartige Schaltgabelführung 18 für den Eingriff einer nicht dargestellten Schaltgabel bilden. Innenseitig weist der Träger 16 eine Auflagefläche 20 für die Bogensegmente 4 auf. Bei dem dargestellten Träger 16 stehen Stege 22 auf der Auflagefläche 20 radial nach innen vor, die die Positionierung der Bogensegmente 4 vorgeben. Die Ränder 6, 7 stehen radial um die Breite des Blechstreifens 3 hervor, so dass dieser axial von den Randinnenseiten 21 formschlüssig eingefasst und abgestützt wird.

### Bezugszeichen

| | |
|---|---|
| 1 | Schiebemuffe |
| 1a | Rotationsachse |
| 2 | Verzahnung |
| 3 | Blechstreifen |
| 4 | Bogensegment |
| 5 | Zahn |
| 6 | Rand |
| 7 | Rand |
| 8 | Zahnspitzen |
| 9 | Dachschrägen |
| 10 | Riegelnutzahn |
| 11 | Stirnseite |
| 12 | Stirnseite |
| 13 | Ende |
| 14 | Zahnlücke |
| 15 | Ende |
| 16 | Träger |
| 17 | Ring |
| 18 | Schaltgabelführung |
| 19 | Rastvertiefung |
| 20 | Auflagefläche |
| 21 | Randinnenseite |
| 22 | Steg |
| | |
| b | Breite Blechstreifen |

## Patentansprüche (Patentansprüche für folgende(n) Vertragsstaat(en): BE, BG, CH, CY, CZ, DK, EE, ES, FI, GB, GR, HU, IE, IS, LI, LT, LU, LV, MC, MT, NL, PL, PT, RO, SI, SK, TR)

1. Schiebemuffe (1) einer Synchronisiereinheit eines Schaltgetriebes, die einen durch eine Schaltgabel führbaren Träger (16) als Muffenkörper sowie eine Verzahnung (2) am Innenumfang der Schiebemuffe, welche in Richtung der Längsmittelachse (1a) der Synchronisiereinheit verläuft, aufweist, **dadurch gekennzeichnet, dass** die Verzahnung (2) aus mehreren Bogensegmenten (4) ausgebildet ist, wobei die Bogensegmente (4) spanlos hergestellt und durch den Träger (16) zumindest axial geführt sind.

2. Schiebemuffe nach Anspruch 1, **dadurch gekennzeichnet, dass** die Bogensegmente (4) sich zu einem Vollkreis ergänzen.

3. Schiebemuffe nach Anspruch 1, **dadurch gekennzeichnet, dass** drei gleich große Bogensegmente (4) die Verzahnung bilden.

4. Schiebemuffe nach Anspruch 1, **dadurch gekennzeichnet, dass** der Träger (16) Ränder (6, 7) aufweist, welche die Bogensegmente (4) axial führen.

5. Schiebemuffe nach Anspruch 1, **dadurch gekennzeichnet, dass** die Bogensegmente (4) mit dem Träger (16) stoffschlüssig verbunden sind.

6. Schiebemuffe nach Anspruch 1, **dadurch gekennzeichnet, dass** die Bogensegmente (16) geprägt sind.

7. Schiebemuffe nach Anspruch 1, **dadurch gekennzeichnet, dass** der Träger (16) aus Massivmaterial ausgebildet ist.

8. Schiebemuffe nach Anspruch 1, **dadurch gekennzeichnet, dass** der Träger (16) ungehärtet ist.

9. Schiebemuffe nach Anspruch 1, **dadurch gekennzeichnet, dass** der Träger (16) aus Kunststoff ausgebildet ist.

10. Schiebemuffe (1) nach Anspruch 1, **dadurch gekennzeichnet, dass** die Bogensegmente (4) Zähne (5) und Zahnlücken (14) aufweisen, wobei die Zähne (5) trogförmig ausgebildet sind, Dachschrägen (9) sowie Zahnspitzen (8) aufweisen und wobei die Bogensegmente (4) aus einem Blechstreifen (3) hergestellt sind, dessen Stärke nicht größer ist als die Breite der Randinnenseiten (21) der Ränder (6, 7).

11. Schiebemuffe nach Anspruch 1, **dadurch gekennzeichnet, dass** der Träger (16) einteilig ausgebildet ist.

12. Schiebemuffe nach Anspruch 1, **dadurch gekennzeichnet, dass** die Bogensegmente (4) bezüglich des Trägers (16) frei beweglich sind.

13. Schiebemuffe (1) einer Synchronisiereinheit eines Schaltgetriebes, die einen durch eine Schaltgabel führbaren Träger (16) als Muffenkörper sowie eine Verzahnung (2) am Innenumfang der Schiebemuffe, welche in Richtung der Längsmittelachse (1a) der Synchronisiereinheit verläuft, aufweist, **dadurch gekennzeichnet, dass** die Verzahnung (2) aus mehreren Bogensegmenten (4) ausgebildet ist, wobei der Träger (16) als Bandage die Bogensegmente (4) radial abstützt.

14. Synchronisiereinheit eines Schaltgetriebes mit einer Schiebemuffe nach Anspruch 1 oder 13, **dadurch gekennzeichnet, dass** die Schaltgabel und die Schiebemuffe (1) miteinander drehfest verbunden sind.

15. Synchronisiereinheit nach Anspruch 14, **dadurch gekennzeichnet, dass** die Schaltgabel und die Schiebemuffe (1) einteilig ausgebildet sind.

## Patentansprüche (Patentansprüche für folgende(n) Vertragsstaat(en): AT, DE, FR, IT, SE)

1. Schiebemuffe (1) einer Synchronisiereinheit eines Schaltgetriebes, die einen durch eine Schaltgabel führbaren Träger (16) als Muffenkörper sowie eine Verzahnung (2) am Innenumfang der Schiebemuffe, welche in Richtung der Längsmittelachse (1a) der Synchronisiereinheit verläuft, aufweist, **dadurch gekennzeichnet, dass** die Verzahnung (2) aus mehreren Bogensegmenten (4) ausgebildet ist, wobei die Bogensegmente (4) spanlos durch Kaltumformen aus Blech hergestellt und durch den Träger (16) zumindest axial geführt sind.

2. Schiebemuffe nach Anspruch 1, **dadurch gekennzeichnet, dass** die Bogensegmenten (4) sich zu einem Vollkreis ergänzen.

3. Schiebemuffe nach Anspruch 1, **dadurch gekennzeichnet, dass** drei gleich große Bogensegmente (4) die Verzahnung bilden.

4. Schiebemuffe nach Anspruch 1, **dadurch gekennzeichnet, dass** der Träger (16) Ränder (6, 7) aufweist, welche die Bogensegmente (4) axial führen.

5. Schiebemuffe nach Anspruch 1, **dadurch gekennzeichnet, dass** die Bogensegmente (4) mit dem Träger (16) stoffschlüssig verbunden sind.

6. Schiebemuffe nach Anspruch 1, **dadurch gekennzeichnet, dass** die Bogensegmente (16) geprägt sind.

7. Schiebemuffe nach Anspruch 1, **dadurch gekennzeichnet, dass** der Träger (16) aus Massivmaterial ausgebildet ist.

8. Schiebemuffe nach Anspruch 1, **dadurch gekennzeichnet, dass** der Träger (16) ungehärtet ist.

9. Schiebemuffe nach Anspruch 1, **dadurch gekennzeichnet, dass** der Träger (16) aus Kunststoff ausgebildet ist.

10. Schiebemuffe (1) nach Anspruch 1, **dadurch gekennzeichnet, dass** die Bogensegmente (4) Zähne (5) und Zahnlücken (14) aufweisen, wobei die Zähne (5) trogförmig ausgebildet sind, Dachschrägen (9) sowie Zahnspitzen (8) aufweisen und wobei die Bogensegmente (4) aus einem Blechstreifen (3) hergestellt sind, dessen Stärke nicht größer ist als die Breite der Randinnenseiten (21) der Ränder (6, 7).

11. Schiebemuffe nach Anspruch 1, **dadurch gekennzeichnet, dass** der Träger (16) einteilig ausgebildet ist.

12. Schiebemuffe nach Anspruch 1, **dadurch gekennzeichnet, dass** die Bogensegmente (4) bezüglich des Trägers (16) frei beweglich sind.

13. Schiebemuffe (1) einer Synchronisiereinheit eines Schaltgetriebes, die einen durch eine Schaltgabel führbaren Träger (16) als Muffenkörper sowie eine Verzahnung (2) am Innenumfang der Schiebemuffe, welche in Richtung der Längsmittelachse (1a) der Synchronisiereinheit verläuft, aufweist, **dadurch gekennzeichnet, dass** die Verzahnung (2) aus mehreren kaltumformtechnisch aus Blech Bogensegmenten (4) ausgebildet ist, wobei der Träger (16) als Bandage die Bogensegmente (4) radial abstützt.

14. Synchronisiereinheit eines Schaltgetriebes mit einer Schiebemuffe nach Anspruch 1 oder 13, **dadurch gekennzeichnet, dass** die Schaltgabel und die Schiebemuffe (1) miteinander drehfest verbunden sind.

15. Synchronisiereinheit nach Anspruch 14, **dadurch gekennzeichnet, dass** die Schaltgabel und die Schiebemuffe (1) einteilig ausgebildet sind.

## Claims (Claims for the following Contracting State(s): BE, BG, CH, CY, CZ, DK, EE, ES, FI, GB, GR, HU, IE, IS, LI, LT, LU, LV, MC, MT, NL, PL, PT, RO, SI, SK, TR)

1. Slider sleeve (1) of a synchronizing unit of a change-speed gearbox, which slider sleeve (1) has a carrier (16) as sleeve body, which can be guided by a selector fork, and a spline system (2) on the inner circumference of the slider sleeve, which spline system (2) runs in the direction of the longitudinal centre axis (1a) of the synchronizing unit, **characterized in that** the spline system (2) is formed from a plurality of arc segments (4), the arc segments (4) being produced in a chipless manner and being guided at least axially by the carrier (16).

2. Slider sleeve according to Claim 1, **characterized in that** the arc segments (4) complete one another to form a full circle.

3. Slider sleeve according to Claim 1, **characterized in that** three equally large arc segments (4) form the spline system.

4. Slider sleeve according to Claim 1, **characterized in that** the carrier (16) has edges (6, 7) which guide the arc segments (4) axially.

5. Slider sleeve according to Claim 1, **characterized in that** the arc segments (4) are connected to the carrier (16) in a material-to-material manner.

6. Slider sleeve according to Claim 1, **characterized in that** the arc segments (16) are embossed.

7. Slider sleeve according to Claim 1, **characterized in that** the carrier (16) is formed from solid material.

8. Slider sleeve according to Claim 1, **characterized in that** the carrier (16) is unhardened.

9. Slider sleeve according to Claim 1, **characterized in that** the carrier (16) is formed from plastic.

10. Slider sleeve (1) according to Claim 1, **characterized in that** the arc segments (4) have teeth (5) and tooth gaps (14), the teeth (5) being of trough-like configuration and having sloping roof profiles (9) and tooth tips (8), and the arc segments (4) being produced from a sheet-metal strip (3), the thickness of which is not greater than the width of the edge inner sides (21) of the edges (6, 7).

11. Slider sleeve according to Claim 1, **characterized in that** the carrier (16) is of single-piece configuration.

12. Slider sleeve according to Claim 1, **characterized in that** the arc segments (4) are freely movable with regard to the carrier (16).

13. Slider sleeve (1) of a synchronizing unit of a change-speed gearbox, which slider sleeve (1) has a carrier (16) as sleeve body, which can be guided by a selector fork, and a spline system (2) on the inner circumference of the slider sleeve, which spline system (2) runs in the direction of the longitudinal centre axis (1a) of the synchronizing unit, **characterized in that** the spline system (2) is formed from a plurality of arc segments (4), the carrier (16) supporting the arc segments (4) radially as a brace.

14. Synchronizing unit of a change-speed gearbox having a slider sleeve according to Claim 1 or 13, **characterized in that** the selector fork and the slider sleeve (1) are connected fixedly to one another so as to rotate together.

15. Synchronizing unit according to Claim 14, **characterized in that** the selector fork and the slider sleeve (1) are configured in one piece.

## Claims (Claims for the following Contracting State(s): AT, DE, FR, IT, SE)

1. Slider sleeve (1) of a synchronizing unit of a change-speed gearbox, which slider sleeve (1) has a carrier (16) as sleeve body, which can be guided by a selector fork, and a spline system (2) on the inner circumference of the slider sleeve, which spline system (2) runs in the direction of the longitudinal centre axis (1a) of the synchronizing unit, **characterized in that** the spline system (2) is formed from a plurality of arc segments (4), the arc segments (4) being produced in a chipless manner and being guided at least axially by the carrier (16).

2. Slider sleeve according to Claim 1, **characterized in that** the arc segments (4) complete one another to form a full circle.

3. Slider sleeve according to Claim 1, **characterized in that** three equally large arc segments (4) form the spline system.

4. Slider sleeve according to Claim 1, **characterized in that** the carrier (16) has edges (6, 7) which guide the arc segments (4) axially.

5. Slider sleeve according to Claim 1, **characterized in that** the arc segments (4) are connected to the carrier (16) in a material-to-material manner.

6. Slider sleeve according to Claim 1, **characterized in that** the arc segments (16) are embossed.

7. Slider sleeve according to Claim 1, **characterized in that** the carrier (16) is formed from solid material.

8. Slider sleeve according to Claim 1, **characterized in that** the carrier (16) is unhardened.

9. Slider sleeve according to Claim 1, **characterized in that** the carrier (16) is formed from plastic.

10. Slider sleeve (1) according to Claim 1, **characterized in that** the arc segments (4) have teeth (5) and tooth gaps (14), the teeth (5) being of trough-like configuration and having sloping roof profiles (9) and tooth tips (8), and the arc segments (4) being produced from a sheet-metal strip (3), the thickness of which is not greater than the width of the edge inner sides (21) of the edges (6, 7).

11. Slider sleeve according to Claim 1, **characterized in that** the carrier (16) is of single-piece configuration.

12. Slider sleeve according to Claim 1, **characterized in that** the arc segments (4) are freely movable with regard to the carrier (16).

13. Slider sleeve (1) of a synchronizing unit of a change-speed gearbox, which slider sleeve (1) has a carrier (16) as sleeve body, which can be guided by a selector fork, and a spline system (2) on the inner circumference of the slider sleeve, which spline system (2) runs in the direction of the longitudinal centre axis (1a) of the synchronizing unit, **characterized in that** the spline system (2) is formed from a plurality of arc segments (4), the carrier (16) supporting the arc segments (4) radially as a brace.

14. Synchronizing unit of a change-speed gearbox having a slider sleeve according to Claim 1 or 13, **characterized in that** the selector fork and the slider sleeve (1) are connected fixedly to one another so as to rotate together.

15. Synchronizing unit according to Claim 14, **characterized in that** the selector fork and the slider sleeve (1) are configured in one piece.

## Revendications (Revendications pour l'(les) Etat(s) contractant(s) suivant(s): BE, BG, CH, CY, CZ, DK, EE, ES, FI, GB, GR, HU, IE, IS, LI, LT, LU, LV, MC, MT, NL, PL, PT, RO, SI, SK, TR)

1. Manchon coulissant (1) d'une unité de synchronisation d'une boite de vitesses, lequel manchon coulissant présente un support (16) pouvant être guidé par une fourchette de changement de vitesses sous forme de corps de manchon ainsi qu'une denture (2) à la périphérie intérieure du manchon coulissant, laquelle s'étend dans la direction de l'axe médian longitudinal (1a) de l'unité de synchronisation, **caractérisé en ce que** la denture (2) est réalisée à partir de plusieurs segments d'arc (4), les segments d'arc (4) étant fabriqués par usinage sans enlèvement de copeaux, et étant guidés au moins axialement par le support (16).

2. Manchon coulissant selon la revendication 1, **caractérisé en ce que** les segments d'arc (4) se complètent mutuellement pour former un cercle complet.

3. Manchon coulissant selon la revendication 1, **caractérisé en ce que** trois segments d'arc (4) de même taille forment la denture.

4. Manchon coulissant selon la revendication 1, **caractérisé en ce que** le support (16) présente des bords (6, 7) qui guident axialement les segments d'arc (4).

5. Manchon coulissant selon la revendication 1, **caractérisé en ce que** les segments d'arc (4) sont connectés par engagement par liaison de matière au support (16).

6. Manchon coulissant selon la revendication 1, **caractérisé en ce que** les segments d'arc (16) sont gaufrés.

7. Manchon coulissant selon la revendication 1, **caractérisé en ce que** le support (16) est réalisé en matériau massif.

8. Manchon coulissant selon la revendication 1, **caractérisé en ce que** le support (16) n'est pas trempé.

9. Manchon coulissant selon la revendication 1, **caractérisé en ce que** le support (16) est réalisé en plastique.

10. Manchon coulissant (1) selon la revendication 1, **caractérisé en ce que** les segments d'arc (4) présentent des dents (5) et des espaces entre-dents (14), les dents (5) étant réalisées en forme d'auges, présentant des pentes de toit (9) et des pointes de dents (8), et les segments d'arc (4) étant fabriqués en une bande de tôle (3) dont l'épaisseur n'est pas supérieure à la largeur des côtés intérieurs de bord (21) des bords (6, 7).

11. Manchon coulissant selon la revendication 1, **caractérisé en ce que** le support (16) est réalisé d'une seule pièce.

12. Manchon coulissant selon la revendication 1, **caractérisé en ce que** les segments d'arc (4) sont librement mobiles par rapport au support (16).

13. Manchon coulissant (1) d'une unité de synchronisation d'une boite de vitesses, lequel manchon coulissant présente un support (16) pouvant être guidé par une fourchette de changement de vitesses sous forme de corps de manchon ainsi qu'une denture (2) à la périphérie intérieure du manchon coulissant, laquelle s'étend dans la direction de l'axe médian longitudinal (1a) de l'unité de synchronisation, **caractérisé en ce que** la denture (2) est réalisée à partir de plusieurs segments d'arc (4), le support (16) supportant radialement les segments d'arc (4) en tant que bandage.

14. Unité de synchronisation d'une boite de vitesses comprenant un manchon coulissant selon la revendication 1 ou 13, **caractérisée en ce que** la fourchette de changement de vitesses et le manchon coulissant (1) sont connectés l'un à l'autre de manière solidaire en rotation.

15. Unité de synchronisation selon la revendication 14, **caractérisée en ce que** la fourchette de changement de vitesses et le manchon coulissant (1) sont réalisés d'une seule pièce.

## Revendications (Revendications pour l'(les) Etat(s) contractant(s) suivant(s): AT, DE, FR, IT, SE)

1. Manchon coulissant (1) d'une unité de synchronisation d'une boîte de vitesses, lequel manchon coulissant présente un support (16) pouvant être guidé par une fourchette de changement de vitesses sous forme de corps de manchon ainsi qu'une denture (2) à la périphérie intérieure du manchon coulissant, laquelle s'étend dans la direction de l'axe médian longitudinal (1a) de l'unité de synchronisation, **caractérisé en ce que** la denture (2) est réalisée à partir de plusieurs segments d'arc (4), les segments d'arc (4) étant fabriqués par usinage sans enlèvement de copeaux, et étant guidés au moins axialement par le support (16).

2. Manchon coulissant selon la revendication 1, **caractérisé en ce que** les segments d'arc (4) se complètent mutuellement pour former un cercle complet.

3. Manchon coulissant selon la revendication 1, **caractérisé en ce que** trois segments d'arc (4) de même taille forment la denture.

4. Manchon coulissant selon la revendication 1, **caractérisé en ce que** le support (16) présente des bords (6, 7) qui guident axialement les segments d'arc (4).

5. Manchon coulissant selon la revendication 1, **caractérisé en ce que** les segments d'arc (4) sont connectés par engagement par liaison de matière au support (16).

6. Manchon coulissant selon la revendication 1, **caractérisé en ce que** les segments d'arc (16) sont gaufrés.

7. Manchon coulissant selon la revendication 1, **caractérisé en ce que** le support (16) est réalisé en matériau massif.

8. Manchon coulissant selon la revendication 1, **caractérisé en ce que** le support (16) n'est pas trempé.

9. Manchon coulissant selon la revendication 1, **caractérisé en ce que** le support (16) est réalisé en plastique.

10. Manchon coulissant (1) selon la revendication 1, **caractérisé en ce que** les segments d'arc (4) présentent des dents (5) et des espaces entre-dents (14), les dents (5) étant réalisées en forme d'auges, présentant des pentes de toit (9) et des pointes de dents (8), et les segments d'arc (4) étant fabriqués en une bande de tôle (3) dont l'épaisseur n'est pas supérieure à la largeur des côtés intérieurs de bord (21) des bords (6, 7).

11. Manchon coulissant selon la revendication 1, **caractérisé en ce que** le support (16) est réalisé d'une seule pièce.

12. Manchon coulissant selon la revendication 1, **caractérisé en ce que** les segments d'arc (4) sont librement mobiles par rapport au support (16).

13. Manchon coulissant (1) d'une unité de synchronisation d'une boite de vitesses, lequel manchon coulissant présente un support (16) pouvant être guidé par une fourchette de changement de vitesses sous forme de corps de manchon ainsi qu'une denture (2) à la périphérie intérieure du manchon coulissant, laquelle s'étend dans la direction de l'axe médian longitudinal (1a) de l'unité de synchronisation, **caractérisé en ce que** la denture (2) est réalisée à partir de plusieurs segments d'arc (4), le support (16) supportant radialement les segments d'arc (4) en tant que bandage.

14. Unité de synchronisation d'une boite de vitesses comprenant un manchon coulissant selon la revendication 1 ou 13, **caractérisée en ce que** la fourchette de changement de vitesses et le manchon coulissant (1) sont connectés l'un à l'autre de manière solidaire en rotation.

15. Unité de synchronisation selon la revendication 14, **caractérisée en ce que** la fourchette de changement de vitesses et le manchon coulissant (1) sont réalisés d'une seule pièce.
